# EUROPEAN PATENT APPLICATION

(11) **EP 1 087 494 A2**
(43) Date of publication of application: **28.03.2001**
(21) Application number: 00120094.8
(22) Date of filing: 15.09.2000
(51) Int. Cl.: H02J 7/00

(54) **Transformer with power saving in standby condition and method for power saving thereof**

(30) Priority: 15.09.1999 IT PS990015
(71) Applicant: Ecotrafo S.N.C., 61030 Lucrezia di Cartoceto (Pesaro) (IT)
(72) Inventor: Mencarini, Paolo, 61030 Cartoceto (Pesaro) (IT)
(74) Representative: Negrini, Elena

(57) **Abstract**

Transformer with power saving in standby condition having a primary winding connected to terminals (4) of a power supply line and a secondary winding (5) connected to terminals (6) for a load, provides that the primary winding includes a first group (2) of turns connected in series to impedance means (3) with the interposition of a switching mean (7) controlled by a control circuit (9) fit to detect the load power absorption by resistance means (8).

The control circuit (9) is fit to switch the switching mean (7) in order to connect only the first group (2) of turns to the power supply line in correspondence of a load condition or to connect the first group (2)of turns in series to the impedance means (3) in correspondence of a no-load condition.

## Description

This invention relates to electrical machines, particularly to a transformer having a special control circuit allowing a lower power consumption in standby condition, that is the no load condition.

This transformer is designed for electric devices working for short period, but constantly energized, such as the transformers for doorbells, housephones, etc.

It is known that the hysteretic and parasitic losses, which are considerably high also during the standby condition, cause a significant energy dissipation when a transformer remains constantly energized. Particularly, the small transformers, having low efficiency for economic reasons, dissipate in heat an excessive part of energy in comparison with the energy producing the useful effect during the short period of load operation.

A different transformer sizing, fit to reduce the no-load losses, would cause bigger dimensions and higher costs.

The object of the present invention is to reduce considerably the energy losses of constantly energized transformers, which power irregular working loads, maintaining small dimensions and low costs.

The described transformer has two groups of turns in the primary winding and is controlled by means of a circuit that, according to the current absorption detected in the primary winding, switches the inserted number of turns, in order to reduce the current in standby condition and restore the rated voltage, when the load requires power.

The characteristics of the invention are highlighted in the following, with particular reference to the following drawing sheets, in which:
- figure 1 shows a circuit diagram of the transformer and its related control circuit;
- figure 2 shows in detail the control circuit of the transformer of figure 1.

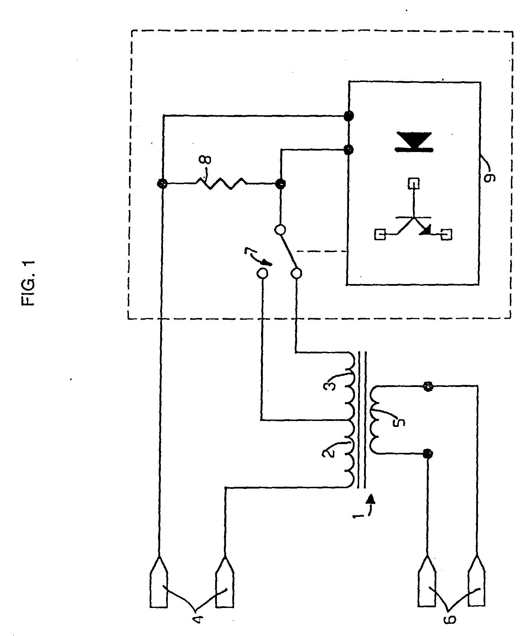

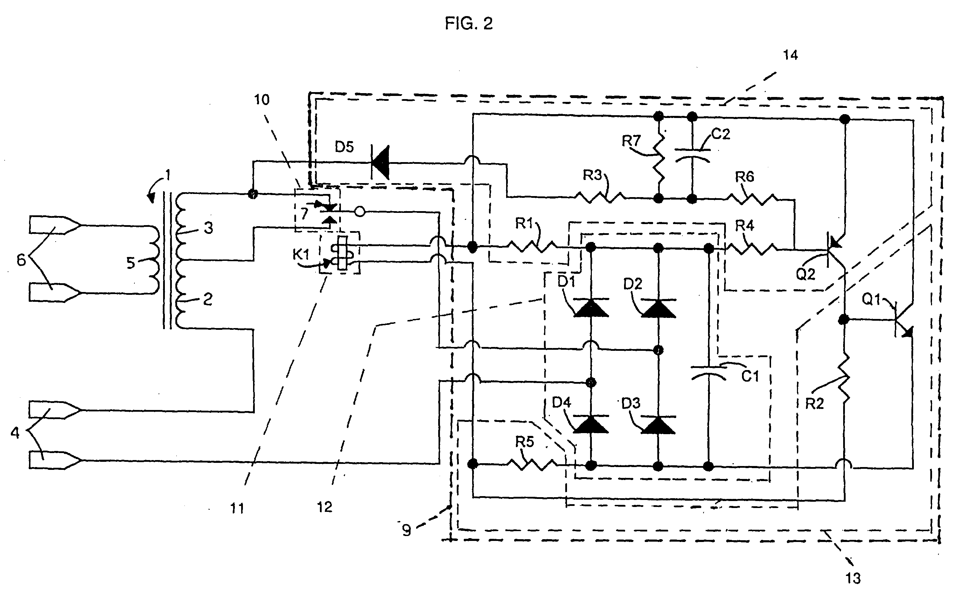

With reference to figures 1 and 2, the numeral 1 indicates the transformer having a primary winding, consisting of a first group 2 of turns connected in series to impedance means 3 consisting, for instance, of a second group 3 of turns. The ends of the first 2 and second 3 groups are powered in series at terminals 4 by the power supply line.

The turn number of the first group 2 of turns corresponds to the normal transformer operation, while the turn group 3 is additional and fits, when is inserted, to increase the turn number of the primary winding and thus lower the current absorbed during the standby condition of the transformer.

The numeral 5 indicates the secondary transformer winding, whose terminals 6 are occasionally connected to a load, for instance a doorbell.

The transformer is in standby condition when the primary winding is energized and the secondary winding 5 has no load.

The numeral 7 indicates a switching mean consisting, for instance, of a relay or an electronic solid-state device, for instance a triac, a transistor, etc., which switches the number of the primary winding turns inserted according to the load current absorption.

The absorption is detected by the control circuit 9, through the voltage drop onto a resistance means 8, for instance a resistance, connected in series to the primary winding and in parallel to an input of the control circuit 9.

With particularly reference to figure 2, the control circuit includes a switching group 10, an input group 12, a limiting group 13, a de-energizing group 14 and an energizing group 11.

The switching group 10 includes the switching mean 7 fit to insert or remove the second group of turns 3, or an additional impedance, in order to reduce the no-load absorption.

The input group 12 includes essentially a diode bridge D1, D2, D3, D4 and an equalization condenser C1. Such input group 12 rectifies and equalizes the alternate supply voltage in order to generate the direct voltage required for the operation of the control circuit 9.

The limiting group 13 includes a transistor Q1 and a couple of resistances R2 and R5, and sets to the nominal value the current passing through the coil of the relay 7 when a load is connected to the secondary winding of the transformer.

The de-energizing group 14 includes a diode D5, a set of resistances R1, R3, R4, R6, R7, a condenser C2 and a transistor Q2. Such de-energizing group 14 drives the switching group in no-load position.

The energizing group 11 includes a coil K1 of the relay 7 or the excitation port K1 of the solid-state device 7, and drives the switching group in working position when the load is connected.

In detail, the first turn group 2 has a first terminal connected to one of the terminals 4, the impedance means 3 are connected in series to the second terminal of the first turn group 2, the resistance 8 is connected in parallel to the inputs of the control circuit 9 and has a terminal connected to the remaining terminal 4 and the other terminal connected to the switching mean 7.

During the operation the transformer 1, when the load connected to the terminals 6 requires power, the current at the primary winding also increases and thus the voltage drop onto the resistance 8.

When the power request stops, the smaller voltage drop at the resistance 8 signals to the control circuit 9 of the switching mean 7 the new no-load condition.

During the operation in correspondence of a no-load condition at the terminals 6, the contacts of the switching mean 7 are connected in such a way to insert both the turn groups, first 2 and second 3, of the primary winding, in order to reduce the current absorbed by the transformer.

When the circuit 9 detects a current absorption, that is in correspondence of a load condition at the terminals 6, due to the power request by the load, the switching mean 7 switches and connects to the supply line only the first group of turns 2, whose turn number is such to produce the nominal rated voltage at the terminals 6.

When the load current absorption stops, the switching mean 7 returns automatically in the no-load condition, that is the standby condition, when both groups 2 and 3 are inserted in the primary winding of the transformer 1.

In other words, during the standby condition the primary winding current, passing also through the coil K1 of the relay 7, does not reach a level sufficient to energize this latter.

In correspondence of the load connection, the current increases, the relay 7 is energized and commutes the contacts into the operating position. In this condition, when the primary winding current exceeds the nominal current of the relay 7 due to the load, the limiting group 13 starts to work and bypass, by means of the transistor Q1, the exceeding current.

In correspondence of the load removing, the de-energizing group 14 detects such condition and puts in high conduction the transistor Q2 and in saturation the transistor Q1. This latter, draining the current destined to the relay 7 causes its de-energizing and the following switching into standby position.

Due to the control circuit 9, having small dimensions and low cost, and due to the second turn group 3, inserted automatically in the primary winding when the load does not require energy, the transformer dissipation is remarkably reduced during the no-load long periods.

In order to reduce the current absorbed by the transformer in standby condition, a variant of the transformer 1 provides the substitution of the second winding of turns 3 with inductive or capacitive impedance means.

The method for power saving in standby condition includes:
- to power the transformer primary winding by a power supply line;
- to compare, by means of a control circuit 9, the current passing through the primary winding with a predetermined threshold value corresponding to a load condition at the transformer output terminals 6;
- to connect in series impedance means 3 to the first turn group 2 by interposing the switching means 7 controlled by the control circuit 9 in correspondence of current values of the primary winding which are lower than the predetermined threshold value;
- to disconnect or short-circuit the impedance means 3 through the switching mean 7 in correspondence of current values of the primary winding which are higher than the predetermined threshold value.

## Claims

1. Transformer with power saving in standby condition having a primary winding connected to terminals (4) of a power supply line and a secondary winding (5) connected to terminals (6) of a load, said transformer (1) being characterized in that the primary winding includes a first group (2) of turns connected in series to impedance means (3) with the interposition of a switching mean (7) controlled by a control circuit (9) fit to detect the load power absorption by resistance means (8), said control circuit (9) fit to switch the switching mean (7) in order to connect only the first group (2) of turns to the power supply line in correspondence of a load condition or to connect the first group (2) of turns in series to the impedance means (3) in correspondence of a no-load condition.

2. Transformer according to claim 1 characterized in that:
- the first group (2) of turns has a first terminal connected to one of the terminals (4);
- the impedance means (3) are connected in series to the second terminal of the first group (2) of turns;
- the resistance means (8) are connected in parallel to the inputs of the control circuit (9) and has a terminal connected to the remaining terminal (4) and the other terminal connected to the switching mean (7);
- the switching mean (7) is switched by the control circuit (9) in load condition in correspondence of a voltage higher than a predetermined threshold value across the resistance means (8), and is switched into standby condition in correspondence of a voltage, across the resistance means (8), lower than a predetermined threshold value in order to reduce the power absorption of the transformer at no-load condition.

3. Transformer according to anyone of the preceding claims characterized in that the switching mean (7) consists of a relay electromechanical or a solid-state device.

4. Transformer according to anyone of the preceding claims characterized in that the impedance means (3) consists of a second additional group of turns of the primary wending or consists of an inductive or capacitive discrete impedance.

5. Transformer according to claims 1 or claim 2 characterized in that the control circuit (9) essentially includes:
- an input group (12) including a diode bridge (D1, D2, D3, D4) and an equalization condenser (C1), in order to generate the direct voltage required for the operation of the control circuit (9);
- a limiting group (13) including a transistor (Q1) and a couple of resistances (R2) and (R5), in order to limit to the nominal value the control current passing through switching mean (7) with a load connected to the secondary winding of the transformer;
- a de-energizing group (14) including a diode (D5), a set of resistances (R1, R3, R4, R6, R7), a condenser (C2) and a transistor (Q2), in order to switch the switching mean (7) in correspondence of the standby condition.
- an energizing group (11) including a coil (K1) of the switching mean (7), in order to switch the latter in correspondence of the load condition.

6. Method for power saving in standby condition of a transformer having a primary winding including a first group (2) of turns and a secondary winding (5), said method being characterized in that:
- to power the primary winding of the transformer (1) by a power supply line;
- to compare, by means of a control circuit (9), the current passing through the primary winding with a predetermined threshold value corresponding to a load condition at the transformer output terminals (6);
- to connect in series impedance means (3) to the first group (2) of turns through the switching mean (7) controlled by the control circuit (9) in correspondence of current values of the primary winding which are lower than the predetermined threshold value;
- to disconnect or short-circuit the impedance means (3) through the switching mean (7) in correspondence of current values of the primary winding which are higher than the predetermined threshold value.
